# EUROPEAN PATENT SPECIFICATION

(11) **EP 0 809 204 B1**
(45) Date of publication and mention of the grant of the patent: **19.03.2003**
(21) Application number: 97202191.9
(22) Date of filing: 30.04.1991
(51) Int. Cl.: G06K 7/10, G02B 26/10, G02B 26/08

(54) **Scanning arrangement**
Abtastvorrichtung
Dispositif de balayage

(30) Priority: 08.05.1990 US 520464
(43) Date of publication of application: 26.11.1997
(62) Divisional of application: 91107037.3
(73) Proprietor: SYMBOL TECHNOLOGIES, INC., Holtsville, New York 11742-1300 (US)
(72) Inventor: Dvorkis, Paul, Stony Brook, NY 11970 (US); Shepard, Howard M., Great River, NY 11739 (US); Bard, Simon, Setauket New York 11733 (US); Katz, Joseph, Stony Brook, NY 11790 (US); Barkan, Edward, Setauket, NY 11720 (US)
(74) Representative: Maggs, Michael Norman

(56) References cited:
- EP-A- 0 341 717
- EP-A- 0 344 882
- EP-A- 0 425 844
- WO-A-89/11113
- GB-A- 2 097 148
- GB-A- 2 175 705
- US-A- 4 230 393

## Description

This invention generally relates to an arrangement for reading optically encoded indicia.

Various optical readers and optical scanners have been developed heretofore to optically read bar code symbols applied to objects in order to identify the object by optically reading the symbol thereon. The bar code symbol itself is a coded pattern comprised of a series of bars of various widths, the bars and spaces having different light reflecting properties. The readers and scanners electro-optically decode the coded patterns to multiple digit representations descriptive of the objects.

A particularly advantageous embodiment of such a scanner resided, inter alia, in emitting a light beam, preferably a laser beam, emitted from a light source, preferably a gas laser or a laser diode, and in directing the laser beam to a symbol to be read. En route to the symbol, the laser beam was directed to, and reflected off, a light reflector of a scanning component. The scanning component moved the reflector in a cyclical fashion and caused the laser beam to repetitively scan the symbol. The symbol reflected the laser beam incident thereon. A portion of the incident light reflected off the symbol was collected and detected by a detector component, e.g. a photodiode, of the scanner. The photodiode had a field of view, and the detected light over the field of view was decoded by electrical decode circuitry into data descriptive of the symbol for subsequent processing. The cyclically movable reflector swept the laser beam across the symbol and/or swept the field of view during scanning.

US-A-4,387,297 and US-A-4,496,831 disclose a high-speed scanning component including an electric motor operative for reciprocatingly oscillating a reflector in opposite circumferential directions relative to an output shaft of the motor. Electrical power is continuously applied to the motor during scanning. The light beam which impinges on the light reflector is rapidly swept across a symbol to be scanned in a predetermined cyclical manner. The scanning component comprises at least one scan means for sweeping the symbol along a predetermined direction (X-axis) lengthwise thereof. The scanning component may also comprise another scan means for sweeping the symbol along a traverse direction (Y-axis) which is subsequently orthogonal to the predetermined direction, to thereby generate a raster-type scan pattern over the symbol. In addition to a single scan line and the raster-type pattern, other types of scan patterns are also possible, such as, x-shaped, Lissajous, curvilinear (see US-A-4,871,904), etc. For example, if the X and Y axis scanning motors are both driven such that the light reflectors are driven at a sinusoidally-varying rate of speed, then the scan pattern at the reference plane will be a Lissajous-type pattern for omnidirectional scanning of the symbols. The use of two separate scanning motors and control means to produce the multi-axis and omni-directional scanning pattern increases material and labour costs as well as the amount of electrical power needed to operate the scanner. In addition, the relatively complicated motor shaft and bearing arrangements of the scanning components may result in a useful life that is inadequate for some applications. Furthermore, the scanning components disclosed in UA-A-4,387,297 and US-A-4,496,831 are designed for miniature light reflectors and are not well suited for large scale reflectors.

Document EP-A-0344882 relates to a display unit rather than to an arrangement for reading optically encoded indicia as required by the present invention. This document discloses a scanner component including a permanent magnet, the component being mounted to a support for angular oscillating movement with respect to the support in alternate circumferential directions between first and second scan end positions, and means for electromagnetically driving the component in the first and second circumferential directions to angularly oscillate the component between the first and second scan end positions.

Document EP-A-0425844 is considered to represent the closest prior art, and is citeable under EP Article 54(3). This document discloses the features set out in parts (a) and (b) of claim 1.

According to the present invention there is provided an arrangement for reading optically encoded indicia, the arrangement comprising:
(a) a scanner component for scanning a light beam across the indicia to be read, the component being mounted to a support for angular oscillating movement with respect to the support in alternate circumferential directions between first and second scan end positions;
(b) means for electromagnetically driving the scanner component in alternate circumferential directions between said first and second scan end positions, the said means including a first permanent magnet which is connected to the oscillating scanner component; and
(c) an element on the support which magnetically interacts with the first permanent magnet so as to urge the first permanent magnet and hence the scanner component to a rest position between said first and second scan end positions.

The invention is best understood from the following description of specific embodiments when read in connection with the accompanying drawings, in which:
Figure 1 is a front perspective view of hand-held head employed in a scanner; and
Figure 2 is a perspective view of an embodiment of the scanning arrangement according to this invention.

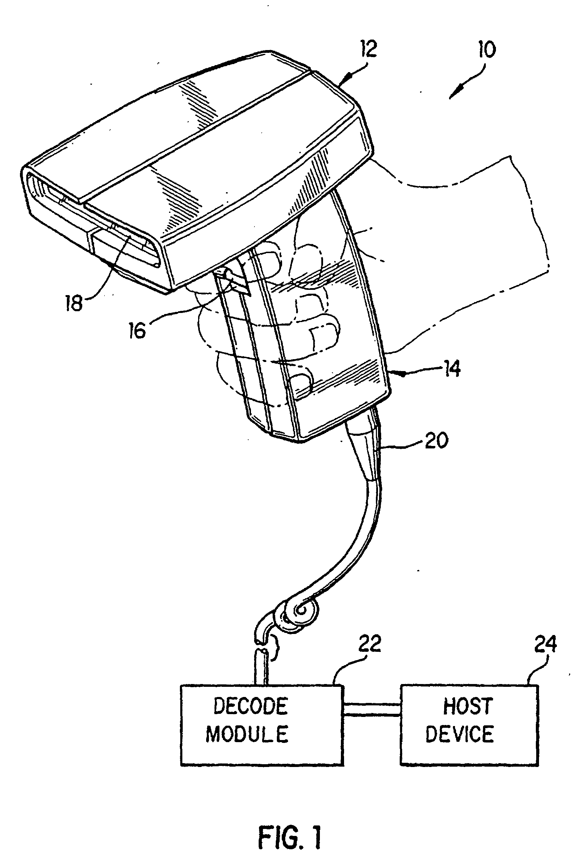

Referring now to the drawings, as shown in Figure 1, reference numeral 10 generally identifies a hand-held, gun-shaped scanner head having a barrel 12 and a handle 14. The head need not be gun-shaped as any suitable configuration may be used, such as box-like. A manually-operable trigger 16 is situated below the barrel 12 on an upper, forwardly-facing part of the handle 14. As known a light source component, typically, but not necessarily, a laser, is mounted inside the head 10. The light source emits a light beam along a transmission path which extends outwardly through a window 18 that faces indicia, e.g. bar code symbols, to be read. Also mounted within the head is a photodetector component, e.g. a photodiode, having a field cf view, and operative for collecting reflected light returning through the window 14 along a return path from the symbol.

A scanner component is mounted within the head 10, and is operative for scanning the symbol and/or the field of view of the photodetector. The scanner component includes at least one light reflector positioned in the transmission path and/or the return path. The reflector is driven by an electrically-operated drive to oscillate in alternate circumferential directions, preferably at the resonant frequency of the scanner component.

The photodetector generates an electrical analog signal indicative of the variable intensity of the reflected light. This analog signal is converted into a digital signal by an analog-to-digital converter circuit. This digital signal is conducted, according to one embodiment, along an electrical cable 20 to a decode module 22 located exteriorly of the head 10. The decode module 22 decodes the digital signal into data descriptive of the symbol. An external host device 24, usually a computer, serves mainly as a data storage in which the data generated by the decode module 22 is stored for subsequent processing.

In operation, each time a user wishes to have a symbol read, the user aims the head at the symbol and pulls the trigger 16 to initiate reading of the symbol. The trigger 16 is an electrical switch that actuates the drive means. The symbol is repetitively scanned a plurality of times per second, e.g. 40 times per second. As soon as the symbol has been successfully decoded and read, the scanning action is automatically terminated, thereby enabling the scanner to be directed to the next symbol to be read in its respective turn. The head need not be a portable hand held type but could also be a fixedly mounted head. Furthermore, the heads may have manually operated triggers or may be continuously operated by direct connection to an electrical source.

The oscillations need only last a second or so, since the multiple oscillations, rather than time, increase the probability of getting a successful decode for a symbol, even a poorly printed one. The resonating reflector has a predetermined, predictable, known, generally uniform, angular speed for increased system reliability.

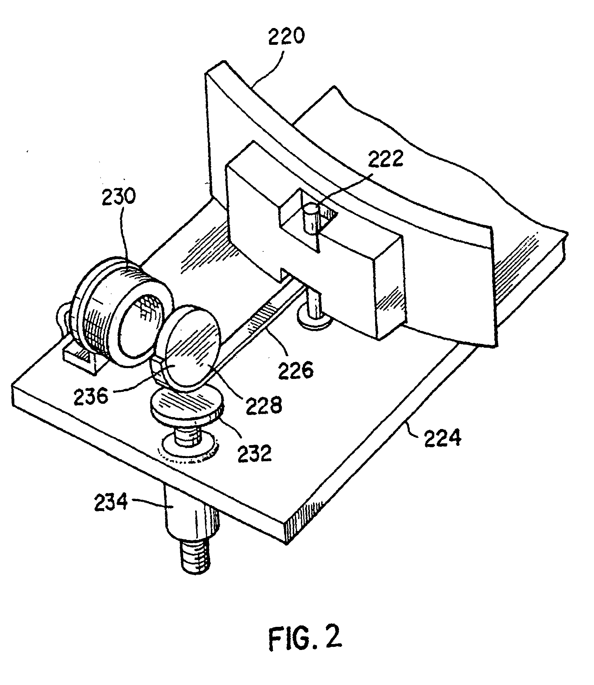

In an embodiment of the present invention as shown in Figure 2, a magnetically activated return means is provided for effecting a spring like restoring force to oscillate the component between scan end positions. As shown in Figure 2, a scanning component 220 is mounted for rotational movement about shaft 222 which is rotationally secured to base 224. A support bracket or lever 226 extends from the component 220 and has mounted on the end thereof a permanent magnet 228. An electromagnetic coil 230 is mounted to the base 224 in operational proximity to the permanent magnet 228. A magnetic member 232 is mounted immediately below the permanent magnet 228 on a pem-nut 234. The permanent magnet 228 is a disk or rectangular shaped member in which faces 236 and 238 (not shown) are magnetized to be of opposite magnetic poles. Thus, face 236 may be the north pole and face 238 may be the south pole, or vice versa.

In one embodiment, the magnetic member 232 is made magnetic permeable material such as a soft iron core. The coil 230 is energized by an AC voltage and the alternating positive and negative current will cause the permanent magnet to alternately be attracted to the coil and repelled from the coil. This will impart an oscillatory angular movement to the scanning mirror 220 between scan end positions. During the oscillatory movement of the component, the permanent magnet 228 will pass over the soft iron core 232 in a back and forth motion. When the coil 230 is de-energized, the magnetic interaction between the magnetic fields of the permanent magnet 228 and soft iron core 232 forces the magnet 228 and, accordingly, the entire moving assembly to align itself with a line of a magnetic equilibrium of the soft core 232, which crosses its center. When the coil 230 is energized, depending on the phase of the AC current, the permanent magnet 228 is either attracted to or repelled from the coil 230 thus magnetizing the core 232 with the polarity opposite to the polarity of the side of the permanent magnet 228 facing the core 232. Since two unlike poles are attracted to each other, this attraction creates a restoring force equivalent to a spring action to cause the component to move towards the equilibrium position. Extreme left and extreme right scan end positions are determined by the relationship between magnitude and phase of the AC current through the coil 230 and the geometry and material of the core 232 which, in turn, determine the value of the restoring torque. When the coil 230 is de-energised, the above described mechanism causes the moving assembly to come to a half in the rest ("equilibrium") position.

In one alternative of this embodiment, a second electromagnetic coil (not shown) may be provided around core 232 such that member 232 will form the core of the second coil. A DC current energizing the second coil will increase the restoring force of the soft iron core. In a further alternative embodiment, member 232 may be a permanent magnet. If the magnet 228 is mounted with its north pole facing away from the coil, magnet 232 would need to have its south pole facing upward. Magnet 232 must be oppositely arranged if the south pole of magnet 228 is facing away from the coil.

It will be understood that each of the elements described above, or two or more together, also may find a useful application in other types of constructions differing from the types described above.

## Claims

1. An arrangement for reading optically encoded indicia, the arrangement comprising:
(a) a scanner component (220) for scanning a light beam across the indicia to be read, the component being mounted to a support (224) for angular oscillating movement with respect to the support in alternate circumferential directions between first and second scan end positions;
(b) means for electromagnetically driving the scanner component in alternate circumferential directions between said first and second scan end positions, the said means including a first permanent magnet (228) which is connected to the oscillating scanner component (220); and
(c) an element (232) on the support (224) which magnetically interacts with the first permanent magnet (228) so as to urge the first permanent magnet (228) and hence the scanner component (220) to a rest position between said first and second scan end positions.

2. An arrangement as claimed in claim 1 in which the element (232) comprises a soft iron core.

3. An arrangement as claimed in claim 1 in which the element (232) includes an electromagnetic coil.

4. An arrangement as claimed in claim 1 in which the element (232) comprises a further permanent magnet.

5. An arrangement as claimed in any one of the preceding claims in which the scanner component (220) is mounted to the support (224) by a shaft (222) which defines a rotation axis.

6. An arrangement as claimed in any one of the preceding claims in which the scanner component (220) includes an elongate lever (226) on which the first permanent magnet (228) is mounted.

7. An arrangement as claimed in any one of the preceding claims including an adjustment nut (234) for adjusting the position of the element (232).

## Patentansprüche

1. Anordnung zum Lesen optisch codierter Anzeigemittel, wobei die Anordnung folgendes aufweist:
(a) eine Abtast- oder Scannerkomponente (220) zum Abtasten oder Scannen eines Lichtstrahls über die zu lesenden Anzeigemittel hinweg, wobei die Komponente an einen Träger (224) angebracht ist für eine oszillatorische Winkelbewegung bezüglich des Trägers in abwechselnden Umfangsrichtungen zwischen ersten und zweiten Abtastendpositionen;
(b) Mittel zum elektromagnetischen Antrieb der Abtastkomponente in alternierenden Umfangsrichtungen zwischen den erwähnten ersten und zweiten Abtastendpositionen, wobei die erwähnten Mittel einen ersten Permanentmagneten (228) aufweisen, der mit der oszillierenden Abtastkomponente (220) verbunden ist; und
(c) ein Element (232) auf dem Träger (224) welches magnetisch in Wechselwirkung tritt mit dem ersten Permanentmagneten (228), um so den ersten Permanentmagneten (228) und somit die Abtastkomponente (220) in eine Ruheposition zwischen den ersten und zweiten Abtastendpositionen zu drücken.

2. Anordnung nach Anspruch 1, wobei das Element (232) einen Weicheisenkern aufweist.

3. Anordnung nach Anspruch 1, wobei das Element (232) eine elektromagnetische Spule aufweist.

4. Anordnung nach Anspruch 1, wobei das Element (232) einen weiteren Permanentmagnet aufweist.

5. Anordnung nach einem der vorherigen Ansprüche, wobei die Abtastkomponente (220) an dem Träger (224) durch eine Welle (222) angebracht ist, die eine Drehachse definiert.

6. Anordnung nach einem der vorherigen Ansprüche, wobei die Abtastkomponente (220) einen langgestreckten Hebel (226) aufweist, auf dem der erste Permanentmagnet (228) angebracht ist.

7. Anordnung nach einem der vorherigen Ansprüche, wobei eine Einstellmutter (234) vorgesehen ist zum Einstellen der Position des Elements (232).

## Revendications

1. Dispositif destiné à lire de façon optique une marque codée, le dispositif comprenant :
(a) un composant (220) de balayage pour balayer avec un faisceau lumineux à travers la marque devant être lue, le composant étant monté sur un support (224) en vue d'un mouvement d'oscillation angulaire par rapport au support dans des directions périphériques alternées entre des première et seconde positions d'extrémité de balayage ;
(b) un moyen pour commander le composant de balayage de façon électromagnétique dans des directions périphériques alternées entre lesdites première et deuxième positions d'extrémité de balayage, ledit moyen incluant un premier aimant permanent (228) relié au composant (220) de balayage oscillant ; et
(c) un élément (232) sur le support (224) qui se trouve en interaction magnétique avec le premier aimant permanent (228) de sorte à pousser le premier aimant permanent (228) et par conséquent le composant de balayage (220) vers une position de repos entre lesdites première et deuxième positions d'extrémité de balayage.

2. Dispositif selon la revendication 1 dans lequel l'élément (232) comprend un noyau en fer doux.

3. Dispositif selon la revendication 1 dans lequel l'élément (232) inclut une bobine électromagnétique.

4. Dispositif selon la revendication 1 dans lequel l'élément (232) comprend un aimant permanent supplémentaire.

5. Dispositif selon l'une quelconque des précédentes revendications dans lequel le composant de balayage (220) est monté sur le support (224) à l'aide d'un arbre (222) qui définit un axe de rotation.

6. Dispositif selon l'une quelconque des précédentes revendications dans lequel le composant de balayage (220) inclut un levier allongé (226) sur lequel est monté le premier aimant permanent (228).

7. Dispositif selon l'une quelconque des précédentes revendications incluant un écrou de réglage (234) destiné au réglage de la position de l'élément (232).
